# FASCICULE DE BREVET EUROPEEN

(11) **EP 2 828 632 B1**
(45) Date de publication et mention de la délivrance du brevet: **16.03.2016**
(21) Numéro de dépôt: 13712734.6
(22) Date de dépôt: 18.03.2013
(51) Int. Cl.: F15B 19/00, G01L 19/00, F16L 41/00

(54) **DISPOSITIF DE PRISE DE PRESSION OPTIMISEE POUR CANAUX CHAUFFANTS**
VORRICHTUNG ZUR OPTIMIERTEN DRUCKMESSUNG FÜR ERWÄRMUNGSKANÄLE
DEVICE FOR OPTIMIZED PRESSURE SENSING FOR HEATING CHANNELS

(30) Priorité: 21.03.2012 FR 1252522
(43) Date de publication de la demande: 28.01.2015
(73) Titulaire: Commissariat à l'Énergie Atomique et aux Énergies Alternatives, 75015 Paris (FR)
(72) Inventeur: GROS D'AILLON, Luc, F-38320 Brie et Angonnes (FR); GUEGUEN, Jil, F-38000 Grenoble (FR); FRANCOIS, Fabrice, F-38850 Chirens (FR)
(74) Mandataire: Brevalex
(86) Numéro de dépôt international: PCT/EP2013/055515
(87) Numéro de publication internationale: WO 2013/139722

(56) Documents cités:
- WO-A-87/07374
- FR-A1- 2 678 350
- US-A- 5 199 297
- US-A1- 2004 237 277

## Description

### DOMAINE TECHNIQUE ET ART ANTERIEUR

L'invention concerne le domaine des mesures de pression sur une tuyauterie ou un conduit d'un circuit hydraulique.

Elle concerne notamment les mesures de pression pour lesquelles une perturbation minimale est souhaitable. Elle est utilisable pour un circuit hydraulique devant être régulé, contrôlé ou mesuré.

Dans les études ou utilisations de dispositifs comprenant un tel circuit, la pression est mesurée en divers endroits. Mais les prises de pression standards, bien que non intrusives, perturbent la mesure ou le phénomène à mesurer.

L'invention vise à résoudre ces problèmes, et notamment à minimiser ces perturbations, plus particulièrement en canaux chauffants.

Dans les canaux chauffants à effet joule direct l'implantation d'un dispositif de mesure perturbe la distribution de courant et donc la puissance locale, ce qui invalide les mesures fines. On appelle effet Joule direct, l'effet Joule qui s'applique directement dans la gaine, au contraire de l'effet joule « indirect » qui est celui qui s'applique dans une résistance électrique spécifique et qui est transmis à la gaine par conduction dans divers matériaux dont des isolants électriques.

Actuellement, la technique mise en oeuvre consiste à souder ou à visser une tuyauterie sur la paroi du tube dans lequel circule le fluide dont on peut mesurer la pression. Cette solution est peu satisfaisante, car elle engendre des déviations de courant qui perturbent la mesure et modifient le phénomène étudié. En d'autres termes, elle modifie la résistance électrique locale du tube chauffant et conduit à une redistribution axiale et azimutale du courant électrique de chauffage, et donc du flux thermique.

Un autre dispositif en vue d'une mesure de pression de fluide est décrit dans le document WO 87/007374. Le système mis en oeuvre est complexe : une partie du fluide est déviée par un outil ajustable qui vient perturber l'écoulement principal du fluide.

La partie du fluide qui est prélevée est ensuite envoyée vers un canal, disposé de manière sensiblement parallèle à l'écoulement principal. Il en résulte un trajet complexe du fluide à mesurer.

Il se pose donc le problème de trouver un dispositif plus simple, tout en étant plus précis et fiable, et qui puisse être adapté en particulier à des canaux chauffants par effet Joule direct.

### EXPOSÉ DE L'INVENTION

L'invention concerne d'abord un dispositif de mesure de pression dans un tube d'un circuit hydraulique, comportant un collier métallique muni de n (>2) butées de contact en matériau isolant électrique, séparées l'une de l'autre et destinées à venir en contact avec la paroi dudit tube, en évitant que le métal du collier ne vienne en contact avec cette paroi.

Si n ≥ 3, le dispositif peut être correctement centré. Dans un mode plus simple on réalise n = 2, les 2 butées ayant une largeur suffisante pour assurer la stabilité.

L'une des butées de contact comporte un passage qui permet de relier l'atmosphère intérieure dudit tube avec des moyens de mesure de pression.

De préférence, le collier comporte n alésages pour recevoir les n butées de contact.

Avantageusement, le collier comporte une rainure interne pour permettre un jeu azimutal limité d'une partie des butées de contact.

Les différents jeux au montage des butées de contact leur permettent d'ajuster leur position au tube et non au collier, ce qui permet un bon contact indépendamment des tolérances de fabrication. Autrement dit, le jeu azimutal des butées leur permet de tourner, légèrement, autour du tube.

Des moyens peuvent être prévus pour centrer le passage avec un orifice réalisé dans la paroi dudit tube.

La butée de contact comportant un passage qui permet de relier l'atmosphère intérieure dudit tube avec des moyens de mesure de pression, peut comporter un joint ou une rainure pour recevoir un joint. Ce joint vient en appui contre la surface du tube.

De préférence encore, le collier comporte 2 parties et des moyens, tels que des pattes latérales ou des protubérances latérales, pour permettre l'assemblage de ces 2 parties en position de serrage autour d'un tube.

On décrit également un procédé de mesure de pression dans un tube d'un circuit hydraulique, ce tube comportant au moins un orifice de mesure de pression, procédé dans lequel :
- on ajuste un collier métallique muni de n (≥2 ou 3) butées de contact en matériau isolant électrique, en appliquant lesdites butées contre la paroi dudit tube et en évitant que le métal du collier ne vienne en contact avec cette paroi, l'une des butées de contact comportant un passage qui vient en alignement avec l'un des orifices de mesure de pression dudit tube,
- on relie ledit passage à des moyens de mesure de pression et on mesure cette pression.

Selon un exemple, le tube est chauffé par effet Joule direct (au sens déjà expliqué ci-dessus, cet effet Joule s'appliquant directement dans la gaine), un courant électrique circulant dans la paroi du tube.

Le collier peut comporter 2 parties assemblées par des moyens pour assembler ces 2 parties en position de serrage autour du tube.

Selon un mode de réalisation préférée d'un dispositif ou d'un procédé, chaque butée de contact comporte une base, qui s'étend selon une direction reliée à un corps ayant de préférence une largeur, suivant une direction sensiblement perpendiculaire à ladite direction, supérieure à la largeur de la base suivant cette même direction ou suivant une direction parallèle, ladite direction traversant une surface extérieure S de la base qui constitue une surface d'appui sur un tube, lorsque le collier est en position sur ce dernier.

Avantageusement, lors de la mise en oeuvre d'un tel procédé, on réalise un centrage préalable du passage par rapport à un orifice de mesure de pression dudit tube à l'aide d'un pion de centrage introduit dans le passage de ladite butée.

On peut réaliser des mesures en 2 points de mesure d'un tube en montant, autour de ce tube, 2 dispositifs de mesure de pression du type décrit ci-dessus. On peut ainsi réaliser une mesure de pression différentielle et/ou une mesure de gradient de pression le long d'un tube.

Dans un dispositif ou un procédé selon l'invention les butées de contact sont, en outre, de préférence en un matériau isolant thermiquement.

De préférence encore, le dispositif ou le collier décrit ci-dessus forme un montage autoclave lorsqu'il est en position sur un tube d'un circuit hydraulique.

Selon un exemple de réalisation, la butée de contact, qui comporte un passage, comporte :
- un joint, par exemple un joint torique, disposé contre une surface d'appui de cette butée contre un tube, ou une gorge réalisée dans cette surface, prévue pour accueillir ledit joint, qui vient en appui contre la surface d'un tube sur lequel le dispositif ou le collier vient à être monté,
- et/ou une gorge pour accueillir un joint radial.

Ces joints peuvent être choisis de sorte que le joint radial a un diamètre supérieur au diamètre du joint disposé contre une surface d'appui de la butée, ou dans une gorge réalisée dans cette surface.

### BRÈVE DESCRIPTION DES DESSINS

- Les figures 1A et 1B sont un exemple de dispositif décrit dans la présente demande,
- la figure 2 représente le dispositif précédent, en position sur le tube d'un d'écoulement fluide,
- les figures 3 et 4 représentent des aspects particuliers d'un dispositif tel que décrit,
- la figure 5 représente une mise en oeuvre dans le cadre d'une mesure de pression en 2 points différents.

### EXPOSÉ DÉTAILLÉ DE MODES DE RÉALISATION PARTICULIERS

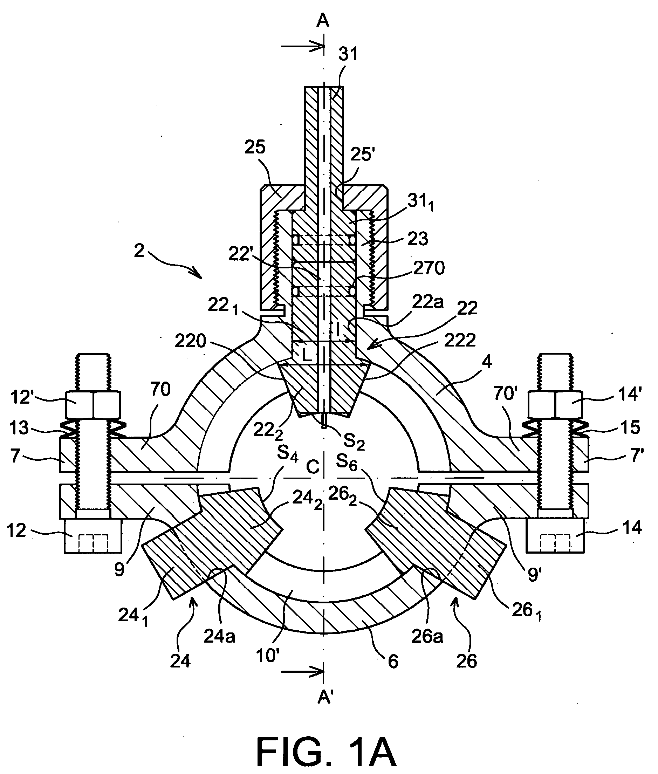

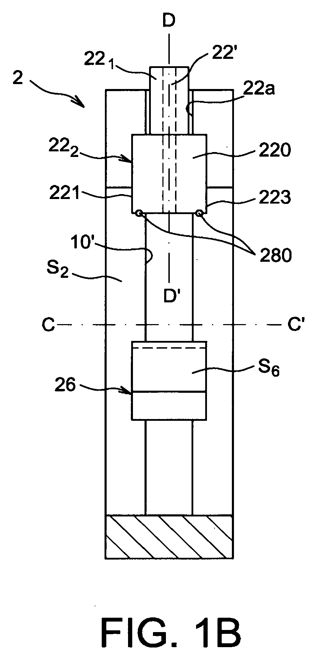

Un exemple de réalisation de l'invention va être donné en liaison avec les figures 1A et 1B, la figure 1B étant une vue en coupe, suivant un plan AA', du dispositif de la figure 1A. Ce plan AA' est perpendiculaire au plan de cette figure 1A.

Il s'agit d'un collier 2, par exemple du type d'un collier de serrage, comportant deux parties 4, 6. Ce collier peut être en un matériau métallique tel qu'un acier inoxydable.

L'intérieur du collier définit une surface circulaire 2' autour d'un axe CC' contenu dans le plan AA', l'intérieur de chaque partie ayant la forme d'un demi-collier. Ces deux parties peuvent être assemblées par des vis 12, 14, et des écrous correspondant 12', 14'. Les vis sont placées dans des trous taraudés réalisés dans des pattes latérales ou protubérances latérales 7, 9, 7', 9' de chaque demi collier. On peut placer au moins une rondelle 13, 15 entre chaque écrou et la surface extérieure 70 de la protubérance latérale correspondante. De préférence, on utilise une rondelle ressort, ce qui contribue à la précision du serrage du collier et à son insensibilité aux dilatations différentielles.

En position assemblée, les protubérances latérales 7, 9, 7', 9' viennent en regard l'une de l'autre. Lors du serrage, elles se rapprochent d'un plan passant par l'axe CC', jusqu'à assurer le serrage, tout en laissant un jeu résiduel.

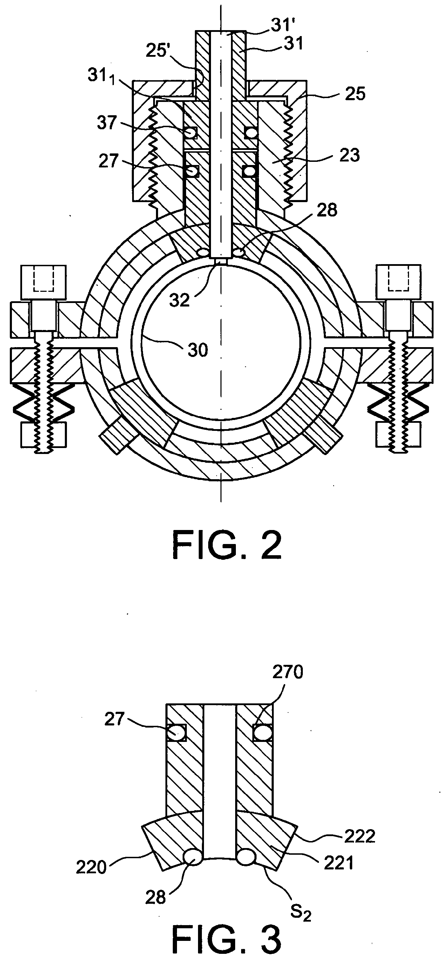

Le collier 2 peut avoir, selon l'axe CC', une largeur comprise entre 15 mm et 25 mm, par exemple d'environ 20 mm. Il est prévu pour comporter, de préférence de manière amovible, au moins trois points, ou pions, ou butées 22, 24, 26 de contact ou d'appui, en un matériau isolant électrique par rapport à la paroi d'un tube (ou tuyauterie ou conduit) 30 sur lequel le collier est monté, comme on le voit en figure 2.

De préférence, dans un mode de réalisation particulier, ce matériau est aussi un isolant thermique : les butées thermiquement isolantes limitent les pertes thermiques ce qui conduit à un dispositif de meilleure qualité, les pertes thermiques étant souvent un problème dans les essais avec canaux chauffants.

Le matériau isolant peut être par exemple du Makrolon, par exemple à 30 % de fibres de verre, ou encore une céramique, par exemple de la zircone. Dans le collier, des alésages 22ₐ, 24ₐ, 26ₐ sont prévus pour recevoir une partie, dite base 22₁, 24₁, 26₁ de chaque butée 22, 24, 26, cette base s'étendant selon une direction DD' (voir figures 1B et 3) et étant, de préférence, sensiblement cylindrique, avec un diamètre par exemple compris entre 5 mm et 15 mm, par exemple encore sensiblement égal à 10 mm.

Le fait d'avoir des butées de positionnement réparties de manière discrète sur le pourtour du collier, en étant espacées l'une de l'autre et séparées par l'atmosphère environnante, permet de minimiser les perturbations thermiques qui pourraient être créées par le positionnement du collier autour d'un tube de mesure 30. Ce système de butée de positionnement permet en outre un centrage précis du dispositif.

Chaque butée comporte en outre un corps 22₂, 24₂, 26₂ qui s'étend aussi selon la direction DD', mais qui est délimitée latéralement :
- d'une part par 2 surfaces 220, 222, symétriques l'une de l'autre par rapport à un plan tel que le plan AA' (figure 1A) et qui sont inclinés de manière à se rejoindre dans ce plan,
- d'autre part, par 2 surfaces 221, 223, parallèles entre elles et sensiblement perpendiculaires à l'axe CC' et à une direction d'écoulement d'un fluide circulant dans un tube 30 sur lequel le dispositif est positionné (voir notamment la figure 2). Ces 2 surfaces 221, 223 sont par exemple séparées d'une distance d'environ 10 mm à 15 mm, par exemple 12 mm.

La zone du corps 22₂, 24₂, 26₂ qui est située du côté de la base a une largeur L, suivant une direction sensiblement perpendiculaire à l'axe DD', supérieure à la largeur I de la base suivant cette même direction ou suivant une direction parallèle. L'axe DD' traverse une surface extérieure S₂, S₄, S₆ du corps qui constitue une surface d'appui sur un tube 30, lorsque le collier est en position sur ce dernier. Cette surface a donc une forme, qui peut être sensiblement concave, et qui est adaptée à la surface extérieure du tube 30 pour venir en contact avec, et en appui contre celle-ci. Cette surface extérieure S₂, S₄, S₆ sera donc appelée surface de contact.

On voit en figures 1A et 1B qu'un passage 22' est réalisé dans l'une des butées 22. Ce passage 22' est dirigé suivant l'axe DD'. Il permet de mettre en contact l'atmosphère intérieure d'un tube 30 - dans lequel un perçage 32 de prise de pression est réalisé - et des moyens de mesure de pression disposés à l'extérieur du tube. Le passage 22' est donc foré au diamètre adapté à la prise de pression, il est par exemple compris entre 1 mm et 5 mm, par exemple encore égal à environ 2 mm.

L'étanchéité de la butée 22 qui comporte ce passage peut être renforcée par rapport à la paroi du tube 30, par un joint 28, par exemple un joint torique, disposé contre la surface S₂ d'appui de cette butée, ou au moins en partie dans une gorge 280 réalisée dans cette surface. Ce joint sera comprimé par le collier 2 lorsque ce dernier est en position serrée autour du tube 30 (figure 2). La ligne de pression peut ensuite être raccordée à un tube inséré dans le passage 22' de prise de pression, par exemple en étant soudé ou monté avec un raccord standard sur la sortie de ce tube. Pour des applications à haute température, par exemple supérieures à 250° C, on peut prendre un joint en carbone (à surface courbe).

Comme on le voit en figure 1A, une bride 23 permet de maintenir la base 22₁ de la butée 22 qui comporte le passage 22' de prise de pression. Cette bride vient en appui contre une portion 40 d'appui, de préférence plane, de la surface extérieure du collier.

La surface extérieure de la bride est filetée, de manière à pouvoir être maintenue par un écrou 25. Comme on le voit plus précisément en figures 1A et 3 une gorge 270 peut être réalisée dans la base 22₁ (ou sur son pourtour) pour accueillir un joint 27 destiné à être comprimé par l'écrou 25. Le joint 27 de type radial est comprimé par l'écrou 25, lorsque celui-ci est en position ; mais, indépendamment de sa compression, le serrage radial du joint est défini par son diamètre de corde, les dimensions de la gorge 270 et le diamètre interne de la bride 23.

La butée 22 est réalisée de telle manière que la pression interne du tube s'applique sur le joint 27 de plus grand diamètre que le joint 28 dont la compression est favorisée d'autant. Il peut s'agir d'un montage de type autoclave. Cet effet autoclave dépend uniquement du rapport de section d'un joint d'étanchéité à l'autre, le tube étant sous pression, mais pas nécessairement chauffant.

L'écrou 25 dispose d'un alésage 25' qui permet de laisser passer l'extrémité d'un tuyau 31 de raccordement aux moyens de mesure de pression. Ce tuyau est de préférence en acier inoxydable.

Comme on le voit sur les figures 1A et 2, ce conduit présente lui-même une partie d'extrémité 31₁, réalisée en un même matériau que le tuyau 31. Cette partie d'extrémité est sensiblement cylindrique et de diamètre égal à celui de l'extrémité de la base 22₁ de la butée 22. Elle est elle aussi insérée dans la bride 23, et peut également comporter une gorge pour accueillir un joint 37 qui sera comprimé par la bride lorsque celle-ci sera en position fixée, maintenue serrée par l'écrou 25. Un conduit 31' est défini à l'intérieur de cette partie d'extrémité 31₁ et du tuyau 31 ; il a sensiblement le même diamètre que le conduit 22' et, lors d'une mesure de pression, vient se positionner en face de celui-ci, comme illustré en figure 2. L'ensemble constitué par le tuyau 31 et sa partie d'extrémité 31₁ a une étanchéité fiable et n'ajoute aucune perturbation dans le flux thermique ou l'écoulement. Le tuyau 31 a, selon un exemple, 6 mm de diamètre extérieur (4 mm de diamètre intérieur) et est en acier inoxydable.

Comme déjà indiqué, des alésages 22ₐ, 24ₐ, 26ₐ sont prévus dans l'épaisseur du collier 2, chacun suivant une direction radiale de celui-ci. Chaque alésage peut recevoir le corps central de l'une des butées 22, 24, 26 de contact ou d'appui, de manière à ce que chaque surface extérieure S₂, S₄, S₆ de contact soit tournée vers l'intérieur du collier 2 pour venir en contact avec la surface extérieure du tube 30 enserré par le collier.

Le caractère électriquement isolant du matériau constitutif des butées permet de ne pas mettre en contact des parties métalliques, d'une part du collier et d'autre part d'un canal sur lequel celui-ci est monté. Cet aspect est particulièrement intéressant pour un canal dans lequel circule un courant ou lorsque ce canal est sous tension électrique.

Dans l'exemple représenté, les 3 butées sont disposées à sensiblement 120° l'une de l'autre, ce qui permet de réaliser une configuration équilibrée des forces d'appui sur une surface d'un tube 30 enserré dans le collier. D'autres configurations peuvent être réalisées. En outre, un système avec 4 buttées peut également être mis en oeuvre.

Comme on le voit en figures 1A et 1B, une rainure 10' est aménagée dans la périphérie du collier.

Pour permettre d'adapter le matériau constitutif des butées 22, 24, 26 et pour obtenir un équilibrage de contact optimal par auto-centrage des butées, celles-ci peuvent bouger, mais de manière limitée, par un mouvement azimutal dans la rainure 10' du collier, et radial dans l'alésage 22A, 24A, 26A correspondant.

A chaque point de mesure de pression, la paroi du tube 30 est percée d'un trou ou perçage 32, 42, de préférence au diamètre minimal compatible avec les besoins (par exemple 0.5 mm), auquel le diamètre de l'alésage réalisé dans la butée 22 est alors sensiblement identique. Pour ce perçage 32, on préfère un diamètre suffisamment petit, de quelques dixièmes de millimètre, par exemple entre 0,1 mm et 0,8 mm, pour induire une perturbation négligeable dans la résistance électrique locale d'un tube 30, lorsque celui-ci est chauffant.

Les moyens 31₁, 31 permettent de relier la sortie de chaque perçage 32 à une ligne de pression.

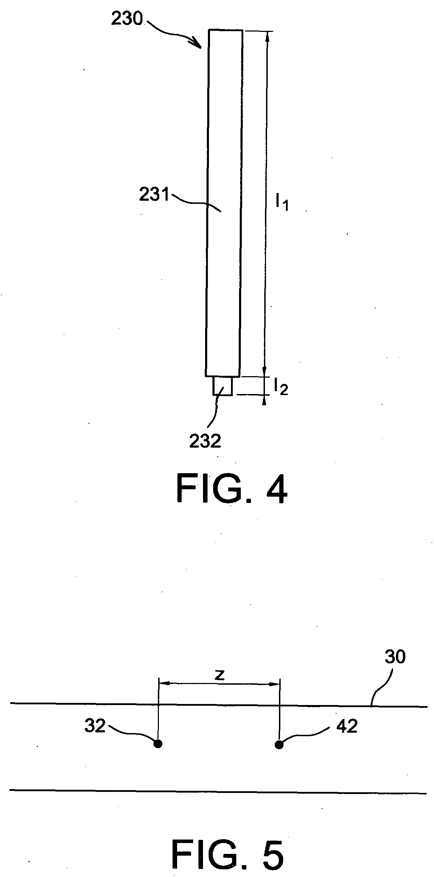

En position serrée du collier autour du tube 30, l'alésage 22' de la butée 22 de contact permettant la prise de pression est centré par rapport au perçage 32 du tube 30. Un pion 230 de centrage, amovible, représentée schématiquement en figure 4, permet de réaliser ce centrage pendant le serrage du collier sur le tube. Selon l'exemple illustré, il comporte :
- un corps 231, par exemple d'une longueur l₁ d'environ 40 mm ; son diamètre est adapté à celui de l'alésage 22', par exemple environ 2 mm,
- une extrémité ou un téton 232, par exemple d'une longueur l₂ d'environ 2 mm ; son diamètre est adapté à celui d'un orifice 32 de prise de pression réalisée dans un tube 30 (voir figure 2), par exemple environ 0,5 mm.

Ce pion est introduit dans l'alésage 22' de la butée 22, et son extrémité est maintenue contre la paroi du tube 30 jusqu'à ce qu'elle puisse pénétrer dans le perçage 32 de prise de pression. L'alésage 22' de la butée 22 est alors aligné avec ce dernier, et la butée 22 est en position de mesure. Après serrage du collier 2, le pion de centrage est ôté et la ligne de pression est connectée, le serrage du collier étant indépendant de celui de l'écrou 25 et le pion de centrage pouvant passer au travers du tuyau 31.

Ce type de dispositif est adapté à une installation dédiée à la recherche sur un écoulement diphasique dans un canal chauffant, notamment du type chauffé par effet Joule direct (un courant électrique circulant dans sa paroi).

Ce type de dispositif est également adapté à une mesure de gradient de pression en 2 points espacés d'une distance z, comme illustrée en figure 5.

En chacun de ces points est réalisé un perçage 32, 42, en vue d'une mesure de pression. Un collier, ou un ensemble, 2 tel que décrit ci-dessus est mis en position autour du tuyau 30, au niveau de chacun des perçages 32, 42. Ainsi, avec 2 colliers, on peut réaliser 2 mesures de pression, simultanées. On peut, à partir de telles mesures, rapidement connaître un gradient de pression entre les deux points de mesure de l'écoulement. Autrement dit, des mesures de pression différentielles précises et sensibles peuvent être effectuées pour fournir des informations sur le gradient de pression local dans divers régimes d'écoulement.

Des mesures dans une large gamme de pression, depuis des faibles pressions différentielles (quelques millibars, par exemple 10 mbar) à une forte pression statique (30 bars) peuvent être réalisées avec une grande précision relative.

Dans un cas où la température et la pression dans le tube restent respectivement inférieures à 100 °C et à 30 bars, le joint 18 est en élastomère et le collier métallique 10 est conçu pour la pression de serrage adaptée, les butées 22, 24, 26 constituant les points de contact étant réalisées en Makrolon.

A plus hautes température et pression, le joint d'étanchéité 18 est de préférence en carbone ou en cuivre recuit et les butées de contact 22, 24, 26 sont réalisées en céramique de type alumine ou zircone. Les butées sont préférentiellement en zircone, meilleur isolant thermique que l'alumine.

Un dispositif tel que décrit ci-dessus peut être adapté à différentes gammes de températures pouvant être rencontrées dans différents environnements de mesure. En particulier, le matériau des butées 22, 24, 26 amovibles peut être adapté en fonction de la température. Le collier de montage 2 selon l'invention permet de réaliser une compensation de dilatation, notamment en cas de variations importantes de température dans une même mesure.

Un tel dispositif peut en outre être aisément positionné autour d'un tube 30, l'alignement étant grandement facilité par la mise en oeuvre des butées 22, 24, 26, et le serrage étant réalisé à l'aide des moyens de fixation disposés dans des pattes latérales comme représentée en figure 1A.

Il assure ainsi une tenue mécanique, une précision de positionnement et une étanchéité, assurant les fiabilités requises en une seule opération.

Dans un exemple, des mesures ont été réalisées sur un tube, dans lequel circule un fluide contenant du fréon 134A, en tant que fluide caloporteur, sous pression de 30 bars, et à 110° C. Le canal chauffant est un tube de 19,2 mm de diamètre externe, chauffé par effet Joule direct, par un courant électrique circulant dans la paroi.

Selon un autre exemple, le fluide caloporteur peut être de l'eau, circulant avec un débit massique compris entre 0,5 et 5 Mg/s/m², à une température d'au moins 20° C, véhiculant une puissance comprise par exemple entre 0,5 et 3 MW/ m² à une pression comprise entre 20 et 200 bars.

## Revendications

1. Dispositif de mesure de pression dans un tube (30) d'un circuit hydraulique, comportant un collier (2) métallique muni de n (>2) butées (22, 24, 26) de contact en matériau isolant électrique, destinées à venir en contact avec la paroi dudit tube, en évitant que le métal du collier ne vienne en contact avec cette paroi, l'une des butées (22) de contact comportant un passage (22') qui permet de relier l'atmosphère intérieure dudit tube avec des moyens de mesure de pression.

2. Dispositif selon la revendication 1, le collier comportant n alésages (22ₐ, 24ₐ, 26ₐ) pour recevoir les n butées de contact.

3. Dispositif selon l'une des revendications 1 ou 2, chaque butée de contact comportant une base (22₁, 24₁, 26₁), qui s'étend selon une direction (DD'), relié à un corps (22₂, 24₂, 26₂) ayant de préférence une largeur, suivant une direction sensiblement perpendiculaire à la direction (DD'), supérieure à la largeur de la base suivant cette même direction ou suivant une direction parallèle, la direction (DD') traversant une surface extérieure S de la base qui constitue une surface d'appui sur un tube (30), lorsque le collier est en position sur ce dernier.

4. Dispositif selon l'une des revendications 1 à 3, le collier comportant une rainure interne (10') pour permettre un jeu azimutal limité d'une partie des butées de contact.

5. Dispositif selon l'une des revendications 1 à 4, comportant en outre des moyens (230) pour centrer le passage (22') avec un orifice (32, 42) réalisé dans la paroi dudit tube (30).

6. Dispositif selon l'une des revendications 1 à 5, la butée (22) de contact comportant un passage (22') qui permet de relier l'atmosphère intérieure dudit tube avec des moyens de mesure de pression, comportant des moyens (28, 280) formant étanchéité.

7. Dispositif selon la revendication 6, dans lequel la butée (22) de contact qui comporte un passage (22') comporte :
- un joint (28), par exemple un joint torique, disposé contre une surface d'appui de cette butée contre un tube (30), ou une gorge (280) réalisée dans cette surface, prévue pour accueillir ledit joint (28) ;
- et/ou une gorge (270) pour accueillir un joint (27) radial.

8. Dispositif selon la revendication 6, dans lequel la butée (22) de contact, qui comporte un passage (22'), comporte :
- un joint (28), par exemple un joint torique, disposé contre une surface d'appui de cette butée contre un tube (30), ou une gorge (280) réalisée dans cette surface, prévue pour accueillir ledit joint (28),
- et une gorge (270) pour accueillir un joint (27) radial,
et dans lequel le joint radial a un diamètre supérieur au diamètre du joint (28) disposé contre une surface d'appui de cette butée, ou dans une gorge (280) réalisée dans cette surface.

9. Dispositif selon l'une des revendications 1 à 8, le collier comportant 2 parties et des moyens (7, 9, 7', 9', 12, 12', 14, 14') pour assembler ces 2 parties en position de serrage autour d'un tube (30).

10. Dispositif selon l'une des revendications 1 à 9, dans lequel les butées (22, 24, 26) de contact sont en un matériau isolant thermiquement.

11. Procédé de mesure de pression dans un tube (30) d'un circuit hydraulique, ce tube comportant au moins un orifice (32, 42) de mesure de pression, procédé dans lequel :
- on ajuste un collier (2) métallique muni de n (>2) butées (22, 24, 26) de contact en matériau isolant électrique, en appliquant lesdites butées contre la paroi dudit tube et en évitant que le métal du collier ne vienne en contact avec cette paroi, l'une des butées (22) de contact comportant un passage (22') qui vient en alignement avec l'un des orifices de mesure de pression dudit tube,
- on relie ledit passage à des moyens de mesure de pression et on mesure cette pression.

12. Procédé selon la revendication 11, le tube étant chauffé par effet Joule direct, un courant électrique circulant dans la paroi du tube.

13. Procédé selon l'une des revendications 11 ou 12, dans lequel on centre le passage (22') par rapport à un orifice (32, 42) de mesure de pression dudit tube (30) à l'aide d'un pion de centrage introduit dans le passage (22') de ladite butée (22).

14. Procédé selon l'une des revendications 11 à 13, dans lequel n ≥ 3.

15. Procédé selon l'une des revendications 11 à 14, le collier formant un montage autoclave lorsqu'il est en position sur ledit tube (30) de circuit hydraulique.

## Patentansprüche

1. Vorrichtung zum Messen eines Drucks in einem Rohr (30) eines Hydraulikkreises, umfassend eine metallische Schelle (2), welche mit n (>2) Anlageelementen (22, 24, 26) aus einem elektrisch isolierenden Material versehen ist, welche dazu vorgesehen sind, mit der Wandung des Rohrs in Kontakt zu kommen, wobei verhindert wird, dass das Metall der Schelle mit der Wandung in Kontakt kommt, wobei eines der Anlageelemente (22) einen Durchgang (22') umfasst, welcher es erlaubt, die innere Atmosphäre des Rohrs mit Mitteln zum Messen eines Drucks zu verbinden.

2. Vorrichtung nach Anspruch 1, wobei die Schelle n Ausnehmungen (22ₐ, 24ₐ, 26ₐ) zum Aufnehmen der n Anlageelemente umfasst.

3. Vorrichtung nach einem der Ansprüche 1 oder 2, wobei jedes Anlageelement eine Basis (22₁, 24₁, 26₁) umfasst, welche sich entlang einer Richtung (DD') erstreckt, verbunden mit einem Körper (22₂, 24₂, 26₂), welcher vorzugsweise einer Richtung im Wesentlichen senkrecht zu der Richtung (DD') folgend eine Größe aufweist, welche größer als die Größe der Basis dieser gleichen Richtung oder einer parallelen Richtung folgend ist, wobei die Richtung (DD') eine äußere Fläche S der Basis durchquert, welche eine Haltefläche an einem Rohr (30) bildet, wenn die Schelle sich in Position an letzterem befindet.

4. Vorrichtung nach einem der Ansprüche 1 bis 3, wobei die Schelle eine innere Rille (10') umfasst, um ein azimutales Spiel zu erlauben, welches von einem Abschnitt der Anlageelemente begrenzt ist.

5. Vorrichtung nach einem der Ansprüche 1 bis 4, ferner umfassend Mittel (230) zum Ausrichten des Durchgangs (22') mit einer Öffnung (32, 42), welche in der Wandung des Rohrs (30) ausgeführt ist.

6. Vorrichtung nach einem der Ansprüche 1 bis 5, wobei das Anlageelement (22) einen Durchgang (22') umfasst, welcher es erlaubt, die innere Atmosphäre des Rohrs mit Mitteln zum Messen eines Drucks zu verbinden, umfassend Mittel (28, 280), welche eine Abdichtung bilden.

7. Vorrichtung nach Anspruch 6, wobei das einen Durchgang (22') umfassende Anlageelement (22) umfasst:
- eine Dichtung (28), beispielsweise einen O-Ring, welche gegen eine Haltefläche dieser Anlage gegen ein Rohr (30) angeordnet ist, oder eine in dieser Fläche gebildete Einschnürung (280), welche dazu vorgesehen ist, die Dichtung (28) aufzunehmen;
- oder/und eine Einschnürung (270) zum Aufnehmen einer radialen Dichtung (27).

8. Vorrichtung nach Anspruch 6, wobei das einen Durchgang (22') umfassende Anlageelement (22) umfasst:
- eine Dichtung (28), beispielsweise einen O-Ring, welche gegen eine Haltefläche dieser Anlage gegen ein Rohr (30) angeordnet ist, oder eine in dieser Fläche gebildete Einschnürung (280), welche dazu vorgesehen ist, die Dichtung (28) aufzunehmen,
- und eine Einschnürung (270) zum Aufnehmen einer radialen Dichtung (27),
und wobei die radiale Dichtung einen Durchmesser aufweist, welcher größer ist als der Durchmesser der Dichtung (28), welche gegen eine Haltefläche dieser Anlage oder in einer Einschnürung (280), welche in dieser Fläche gebildet ist, angeordnet ist.

9. Vorrichtung nach einem der Ansprüche 1 bis 8, wobei die Schelle zwei Abschnitte und Mittel (7, 9, 7', 9', 12, 12', 14, 14') zum Montieren dieser beiden Abschnitte in Klemmposition um das Rohr (30) herum umfasst.

10. Vorrichtung nach einem der Ansprüche 1 bis 9, wobei die Anlageelemente (22, 24, 26) aus einem thermisch isolierenden Material bestehen.

11. Verfahren zum Messen eines Drucks in einem Rohr (30) eines Hydraulikkreises, wobei das Rohr wenigstens eine Öffnung (32, 42) zum Messen des Drucks aufweist, das Verfahren umfassend:
- ein Bereitstellen einer metallischen Schelle (2), welche mit n (>2) Anlageelementen (22, 24, 26) aus einem elektrisch isolierenden Material versehen ist, wobei die Anlagen gegen die Wandung des Rohrs derart angelegt werden, dass verhindert wird, dass das Metall der Schelle mit der Wandung in Kontakt kommt, wobei eines der Anlageelemente (22) einen Durchgang (22') umfasst, welcher in Ausrichtung mit einer der Öffnungen zum Messen des Drucks des Rohrs kommt,
- ein Verbinden des Durchgangs mit Mitteln zum Messen des Drucks und ein Messen des Drucks.

12. Verfahren nach Anspruch 11, wobei das Rohr durch direkten Joule-Effekt erwärmt wird, wobei ein elektrischer Strom in der Wandung des Rohrs fließt.

13. Verfahren nach einem der Ansprüche 11 oder 12, wobei der Durchgang (22') bezüglich einer Öffnung (32, 42) zum Messen des Drucks des Rohrs (30) mit Hilfe eines Ausrichtungsstifts ausgerichtet wird, welcher in den Durchgang (22') der Anlage (22) eingeführt wird.

14. Verfahren nach einem der Ansprüche 11 bis 13, wobei n ≥ 3.

15. Verfahren nach einem der Ansprüche 11 bis 14, wobei die Schelle eine n Autoklav-Aufbau bildet, wenn sie sich in Position an dem Rohr (30) des Hydraulikkreises befindet.

## Claims

1. Pressure measurement device in a tube (30) of a hydraulic circuit comprising a metal collar (2) provided with n (>2) contact stops (22, 24, 26) made of an electrically insulating material, designed to come into contact with the wall of said tube, preventing the metal of the collar coming into contact with this wall, one of the contact stops (22) comprising a passage (22') that will connect the atmosphere inside said tube with pressure measurement means.

2. Device according to claim 1, the collar comprising n reamings (22ₐ, 24ₐ, 26ₐ) in which the n contact stops will fit.

3. Device according to one of claims 1 or 2, each contact stop comprising a base (22₁, 24₁, 26₁), that extends along a direction (DD'), connected to a body (22₂, 24₂, 26₂) preferably with a width along a direction approximately perpendicular to direction (DD'), that is greater than the width of the base along this same direction or along a parallel direction, the direction (DD') passing through an external surface S of the base that forms a bearing surface on a tube (30), when the collar is in position on this tube.

4. Device according to one of claims 1 to 3, the collar comprising an internal groove (10') to enable limited azimuth clearance of part of the contact stops.

5. Device according to one of claims 1 to 4, also comprising means (230) to centre the passage (22') with an orifice (32, 42) formed in the wall of said tube (30).

6. Device according to one of claims 1 to 5, the contact stop (22) comprising a passage (22') that connects the atmosphere inside said tube with the pressure measurement means, comprising means (28, 280) forming the leak tightness.

7. Device according to claim 6, in which the contact stop (22) comprising a passage (22') comprises:
- a seal (28), for example an O-ring placed in contact with a bearing surface of this stop in contact with a tube (30), or a groove (280) formed in this surface, designed to hold said seal (28);
- and/or a groove (270) to hold a radial seal (27).

8. Device according to claim 6, in which the contact stop (22) that comprises a passage (22'), comprises:
- a seal (28), for example an O-ring placed in contact with a bearing surface of this stop in contact with a tube (30), or a groove (280) formed in this surface, designed to hold said seal (28),
- and a groove (270) to hold a radial seal (27);
- and in which the diameter of the radial seal is greater than the diameter of the seal (28) placed in contact with a bearing surface of this stop, or in a groove (280) formed in this surface.

9. Device according to one of claims 1 to 8, the collar comprising 2 parts and means (7, 9, 7', 9', 12, 12', 14, 14') to assemble these 2 parts in a clamped position around a tube (30).

10. Device according to one of claims 1 to 9, in which the contact stops (22, 24, 26) are made from a thermally insulating material.

11. Method of measuring the pressure in a tube (30) of a hydraulic circuit, this tube comprising at least one pressure measurement orifice (32, 42), method in which:
- a metal collar (2) provided with n (>2) contact stops (22, 24, 26) made of an electrically insulating material is adjusted, applying said stops in contact with the wall of said tube and preventing the metal of the collar from coming into contact with this wall, one of the contact stops (22) comprising a passage (22') that is aligned with one of the pressure measurement orifices of said tube,
- said passage is connected to pressure measurement means and this pressure is measured.

12. Method according to claim 11, the tube being heated by an electrical current circulating in the wall of the tube to create a direct Joule effect.

13. Method according to one of claims 11 or 12, in which the centre of the passage (22') is made to coincide with the centre of a pressure measurement orifice (32, 42) in said tube (30) by means of a centring pin inserted in the passage (22') of said stop (22).

14. Method according to one of claims 11 to 13, in which n ≥ 3.

15. Method according to one of claims 11 to 14, the collar forming an autoclave assembly when it is in position on said tube (30) of a hydraulic circuit.
